# EUROPEAN PATENT APPLICATION

(11) **EP 4 618 269 A1**
(43) Date of publication of application: **17.09.2025**
(21) Application number: 24203161.5
(22) Date of filing: 27.09.2024
(51) Int. Cl.: H01M 50/20

(54) **BATTERY TRAY, BATTERY PACK, AND ELECTRICAL DEVICE**

(30) Priority: 13.03.2024 CN 202420493264 U
(71) Applicant: Eve Energy Co., Ltd., Huizhou, Guangdong 516006 (CN)
(72) Inventor: DING, Xunfeng, Huizhou, Guangdong 516006 (CN); ZHOU, Hongquan, Huizhou, Guangdong 516006 (CN)
(74) Representative: Cabinet Beaumont

(57) **Abstract**

Provided are a battery tray, a battery pack, and an electrical device, which relate to the technical field of batteries. The battery tray includes a baseplate (1) and at least two expansion-resistant beams (2) extending along a first direction. One expansion-resistant beam (2) at least includes a first expansion-resistant portion (21) and a second expansion-resistant portion (22). A first mounting region (11) is formed between the first expansion-resistant portion (21) and another expansion-resistant beam (2). A second mounting region (12) is formed between the second expansion-resistant portion (22) and the another expansion-resistant beam (2). The width of the first expansion-resistant portion (21) is not equal to the width of the second expansion-resistant portion (22) along the second direction, and the length of the first mounting region (11) is not equal to the length of the second mounting region (12) along the second direction.

## Description

### TECHNICAL FIELD

The present disclosure relates to the technical field of batteries and, for example, to a battery tray, a battery pack, and an electrical device.

### BACKGROUND

In a battery pack, expansion-resistant beams are mounted on the baseplate of a battery tray to limit cell groups. The multiple cell groups are mounted at intervals on the baseplate along the width direction of the baseplate. In addition, multiple cells in the cell groups are adhered to the baseplate through a structural adhesive. The expansion-resistant beams abut against side surfaces of the cells in the cell groups to resist the expansion and deformation of the cells.

Existing battery trays are all customized according to the number of cells and have regular expansion-resistant beams made of aluminum profiles. When some cell groups have different numbers of cells, the cell groups cannot be in contact with an expansion-resistant beam. Moreover, the sizes of the expansion-resistant beams cannot be adaptively adjusted according to the actual number of cells, resulting in the relatively low versatility of the battery tray. When cells expand and deform, the bottoms of the cells are adhered to the baseplate and remain stationary while the tops of the cells are subjected to less restraint. Therefore, an aluminum connecting bar between respective ones of the cells is detached and the battery pack has the risk of short-circuiting.

### SUMMARY

An object of the present utility model is to provide a battery tray, a battery pack, and an electrical device to limit cell groups having different lengths so that the versatility of the battery tray is improved and the battery pack is prevented from short-circuiting.

To achieve the object, the present utility model provides the technical solutions described below.

A battery tray includes a baseplate and at least two expansion-resistant beams extending along a first direction. At least two expansion-resistant beams are arranged at intervals on the baseplate along a second direction. The first direction is perpendicular to the second direction.

One of the at least two expansion-resistant beams includes at least a first expansion-resistant portion and a second expansion-resistant portion. A first mounting region is formed between the first expansion-resistant portion and another expansion-resistant beam. A second mounting region is formed between the second expansion-resistant portion and the another expansion-resistant beam. The width of the first expansion-resistant portion along the second direction is unequal to the width of the second expansion-resistant portion along the second direction so that the length of the first mounting region along the second direction is unequal to the length of the second mounting region along the second direction.

In some embodiments, the second expansion-resistant portion includes a body and a thickening portion. The width of the first expansion-resistant portion along the second direction is equal to the width of the body along the second direction, and the first expansion-resistant portion is integrally formed with the body. The thickening portion is detachably disposed at a side of the body along the second direction.

In some embodiments, the side of the body along the second direction is connected to the thickening portion through welding.

In some embodiments, a cell group is mounted in the second mounting region. The thickening portion is detachably sandwiched between the body and the cell group. One side surface of the thickening portion along the second direction fits and abuts against the body, and the other side surface of the thickening portion along the second direction fits and abuts against the cell group.

In some embodiments, the first expansion-resistant portion is integrally formed with the second expansion-resistant portion.

In some embodiments, an expansion-resistant beam of the at least two expansion-resistant beams comprises a cavity, and multiple stiffeners are disposed in the cavity.

In some embodiments, at least part of the multiple stiffeners are inclined upwards along a vertical direction.

In some embodiments, the battery tray further includes a longitudinal beam extending along the second direction. A limit slot is formed between the first expansion-resistant portion and the second expansion-resistant portion, and one end of the longitudinal beam is engaged and mounted in the limit slot.

A battery pack includes cell groups and the preceding battery tray. The cell groups are mounted on the battery tray.

An electrical device includes the above preceding battery pack.

The present disclosure has the beneficial effects described below.

The present disclosure provides the battery tray, the battery pack, and the electrical device. A first mounting region is formed between the first expansion-resistant portion of one expansion-resistant beam and another expansion-resistant beam. A second mounting region is formed between the second expansion-resistant portion and the another expansion-resistant beam. The width of the first expansion-resistant portion along the second direction is unequal to the width of the second expansion-resistant portion along the second direction so that the length of the first mounting region along the second direction is unequal to the length of the second mounting region along the second direction. Thus, cell groups having different lengths (that is, cell groups having different numbers of cells) can be mounted in the first mounting region and the second mounting region, respectively. The first expansion-resistant portion limits cell groups mounted in the first mounting region, and the second expansion-resistant portion limits cell groups mounted in the second mounting region so that the same expansion-resistant beam can limit the cell groups having the different numbers of cells separately, thereby improving the versatility of the battery tray. In addition, the expansion-resistant beams can resist the expansion and deformation of the cells so that the detachment of aluminum connecting bars of the cells is avoided and the battery pack is prevented from short-circuiting, thereby improving the security of the battery pack.

### BRIEF DESCRIPTION OF DRAWINGS

FIG. 1 is a structural view of a battery pack according to an embodiment of the present disclosure;
FIG. 2 is a structural view of a battery tray according to an embodiment of the present disclosure;
FIG. 3 is a structural view of an expansion-resistant beam according to an embodiment of the present disclosure;
FIG. 4 is a partial enlarged view of part A in FIG. 3; and
FIG. 5 is a structural view illustrating that an expansion-resistant beam resists the expansion and deformation of cells according to an embodiment of the present disclosure.

### Reference list:

- 1: baseplate
- 11: first mounting region
- 12: second mounting region
- 13: third mounting region
- 2: expansion-resistant beam
- 20: stiffener
- 21: first expansion-resistant portion
- 22: second expansion-resistant portion
- 221: body
- 222: thickening portion
- 23: limit slot
- 3: longitudinal beam
- 4: cell group
- 40: cell

### DETAILED DESCRIPTION

To make the technical problems solved, the technical solutions used, and the technical effects achieved in the present disclosure more apparent, the technical solutions of the present disclosure are further described below in conjunction with drawings and embodiments. It is to be understood that the embodiments described herein are intended to only illustrate and not to limit the present disclosure. Additionally, it is to be noted that for ease of description, only a part, not all, related to the present disclosure is illustrated in the drawings.

In the description of the present disclosure, unless otherwise expressly specified and limited, the term "connected to each other", "connected", or "fixed" is to be construed in a broad sense, for example, as fixedly connected, detachably connected, or integrated; mechanically connected or electrically connected; directly connected to each other or indirectly connected to each other via an intermediary; or internally connected or an interactional relationship between two elements. For those of ordinary skill in the art, specific meanings of the preceding terms in the present disclosure may be understood based on specific situations.

In the present disclosure, unless otherwise expressly specified and limited, when a first feature is described as "on" or "below" a second feature, the first feature and the second feature may be in direct contact, or be in contact via another feature between the two features instead of being in direct contact. Moreover, when the first feature is described as "on", "above", or "over" the second feature, the first feature is right on, above, or over the second feature, the first feature is obliquely on, above, or over the second feature, or the first feature is simply at a higher level than the second feature. When the first feature is described as "under", "below", or "underneath" the second feature, the first feature is right under, below, or underneath the second feature, the first feature is obliquely under, below, or underneath the second feature, or the first feature is simply at a lower level than the second feature.

In the description of this embodiment, it is to be noted that orientations or position relations indicated by terms such as "above", "below", "left", and "right" are based on the drawings. These orientations or position relations are intended only to facilitate the description and simplify an operation and not to indicate or imply that a device or element referred to must have such particular orientations or must be configured or operated in such particular orientations. Thus, these orientations or position relations are not to be construed as limiting the present disclosure. In addition, the terms "first" and "second" are only used for distinguishing between descriptions and have no special meanings.

The technical solutions of the present disclosure are further described below in conjunction with the drawings and the embodiments.

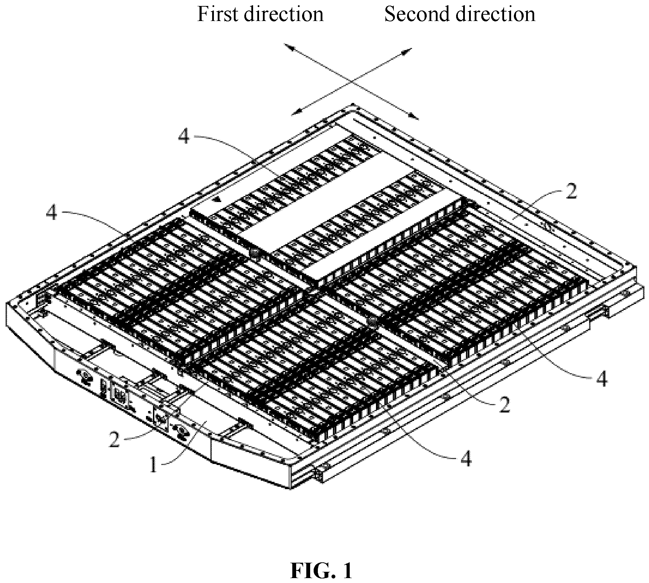

As shown in FIG. 1, a battery pack is provided in this embodiment. The battery pack includes cell groups 4 and a battery tray. The cell groups 4 are mounted on the battery tray. Each of the cell groups 4 includes multiple cells 40 arranged side by side. Positive terminals and negative terminals at the top ends of the cells 40 are welded and connected in series through aluminum connecting bars. The battery tray includes a baseplate 1 and expansion-resistant beams 2. The expansion-resistant beams 2 are mounted on the baseplate 1. The multiple cell groups 4 are mounted in an array on the baseplate 1 along a first direction and a second direction. In addition, the multiple cells 40 in each of the cell groups 4 are disposed side by side along the length direction (the second direction in the figure) of the baseplate 1 and adhered to the baseplate 1 through a structural adhesive. The expansion-resistant beams 2 abut against side surfaces of cells 40 in the cell groups 4 to resist the expansion and deformation of the cells 40.

Existing battery trays are all customized according to the number of cells 40 and have regular expansion-resistant beams made of aluminum profiles. When some cell groups 4 have different numbers of cells 40, the cell groups 4 cannot be in contact with an expansion-resistant beam. Moreover, the sizes of the expansion-resistant beams cannot be adaptively adjusted according to the actual number of cells 40, resulting in the relatively low versatility of the battery tray. When cells 40 expand and deform, the bottoms of the cells 40 are adhered to the baseplate of the battery tray and remain stationary while the tops of the cells 40 are subjected to less restraint. Therefore, an aluminum connecting bar between respective ones of the cells 40 is detached and the battery pack has the risk of short-circuiting.

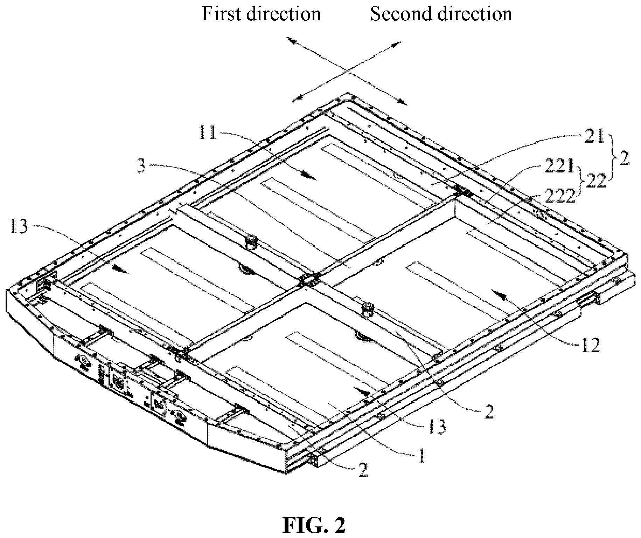

As shown in FIGS. 1 and 2, the battery tray in this embodiment includes the baseplate 1 and at least two expansion-resistant beams 2 extending along the first direction. At least two expansion-resistant beams 2 are arranged at intervals on the baseplate 1 along the second direction. The first direction is perpendicular to the second direction. One of the at least two expansion-resistant beams 2 at least includes a first expansion-resistant portion 21 and a second expansion-resistant portion 22. A first mounting region 11 is formed between the first expansion-resistant portion 21 and another expansion-resistant beam 2. A second mounting region 12 is formed between the second expansion-resistant portion 22 and the another expansion-resistant beam 2. The width of the first expansion-resistant portion 21 along the second direction is unequal to the width of the second expansion-resistant portion 22 along the second direction so that the length of the first mounting region 11 along the second direction is unequal to the length of the second mounting region 12 along the second direction. Since the width of the first expansion-resistant portion 21 along the second direction is unequal to the width of the second expansion-resistant portion 22 along the second direction so that the length of the first mounting region 11 along the second direction is unequal to the length of the second mounting region 12 along the second direction, thus cell groups 4 having different lengths can be mounted in the first mounting region 11 and the second mounting region 12, respectively. The first expansion-resistant portion 21 limits cell groups 4 mounted in the first mounting region 11, and the second expansion-resistant portion 22 limits cell groups 4 mounted in the second mounting region 12 so that the same expansion-resistant beam 2 can limit the cell groups 4 having the different numbers of cells 40 separately, thereby improving the versatility of the battery tray. In addition, the expansion-resistant beams 2 can resist the expansion and deformation of the cells 40 so that the detachment of the aluminum connecting bars of the cells 40 is avoided and the battery pack is prevented from short-circuiting, thereby improving the security of the battery pack.

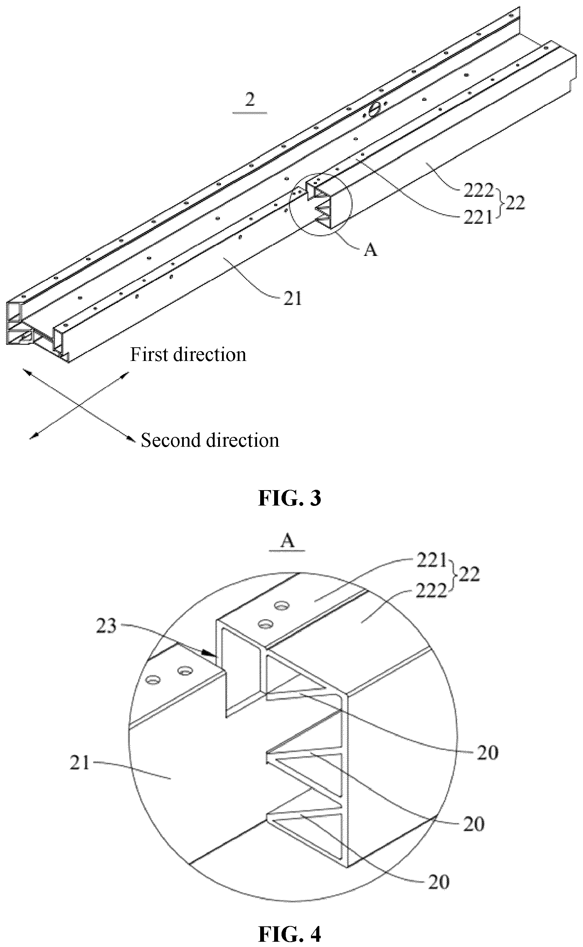

As shown in FIGS. 1 and 2, three expansion-resistant beams 2 arranged at intervals along the second direction and one longitudinal beam 3 are mounted on the baseplate 1 in this embodiment. The longitudinal beam 3 extends along the second direction and is assembled with the three expansion-resistant beams 2 sequentially so that four mounting regions for accommodating cell groups 4 are enclosed. In some embodiments, a limit slot 23 is formed between the first expansion-resistant portion 21 and the second expansion-resistant portion 22 (as shown in FIG. 4), and one end of the longitudinal beam 3 is engaged and mounted in the limit slot 23. In some embodiments, a limit slot 23 is provided on each expansion-resistant beam 2, and the longitudinal beam 3 is engaged and welded in limit slots 23 of the three expansion-resistant beams 2 sequentially so that the expansion-resistant beams 2 and the longitudinal beam 3 are mounted to each other firmly. The first mounting region 11 and the second mounting region 12 are enclosed between one of the expansion-resistant beams 2 and an intermediate expansion-resistant beam 2. Two third mounting regions 13 are enclosed between the other expansion-resistant beam 2 and the intermediate expansion-resistant beam 2. Two cell groups 4 are mounted in each mounting region. The two cell groups 4 are disposed side by side along the first direction and connected in series or parallel through an aluminum connecting bar on a top. The number of cell groups 4 arranged side by side along the first direction in each mounting region may be flexibly adjusted according to actual requirements and is not specifically limited here.

It is to be noted that the two cell groups 4 in each of the third mounting regions 13 have equal lengths along the second direction (that is, the cell groups 4 have the same number of cells 40) so that the two expansion-resistant beams 2 enclosing the third mounting regions 13 are straight, that is, the cross-sectional areas of the two expansion-resistant beams 2 do not change along the first direction. The length of the first mounting region 11 along the second direction is unequal to the length of the second mounting region 12 along the second direction so that the length of the cell groups 4 in the first mounting region 11 is unequal to the length of the cell groups 4 in the second mounting region 12 (that is, the number of cells 40 in the cell groups 4 in the first mounting region 11 is unequal to the number of cells 40 in the cell groups 4 in the second mounting region 12). Thus, at least one of the expansion-resistant beams 2 enclosing the first mounting region 11 and the second mounting region 12 has a changing cross-sectional area along the first direction.

As shown in FIG. 2, in this embodiment, the length of the cell groups 4 in the first mounting region 11 along the second direction is greater than the length of the cell groups 4 in the second mounting region 12 along the second direction. That is, the number of the cells 40 in the cell groups 4 in the first mounting region 11 is greater than the number of the cells 40 in the cell groups 4 in the second mounting region 12. In some embodiments, the number of cells 40 in the cell groups 4 in the first mounting region 11 may be less than the number of cells 40 in the cell groups 4 in the second mounting region 12. The length of the first mounting region 11 along the second direction and the length of the second mounting region 12 along the second direction may be adaptively adjusted. An example in which the number of the cells 40 in the cell groups 4 in the first mounting region 11 is greater than the number of the cells 40 in the cell groups 4 in the second mounting region 12 is used for description.

As shown in FIGS. 2 and 3, the second expansion-resistant portion 22 includes a body 221 and a thickening portion 222. The width of the first expansion-resistant portion 21 along the second direction is equal to the width of the body 221 along the second direction, and the first expansion-resistant portion 21 is integrally formed with the body 221. The thickening portion 222 is detachably disposed at a side of the body 221 along the second direction. The first expansion-resistant portion 21 and the body 221 in this embodiment form one straight beam. That is, the cross-sectional area of the first expansion-resistant portion 21 and the body 221 does not change along the first direction. The thickening portion 222 is additionally provided to increase the width of the second expansion-resistant portion 22 along the second direction. Thus, the length of the second mounting region 12 along the second direction is reduced so that the cell groups 4 having fewer cells 40 can be firmly mounted in the second mounting region 12.

In some embodiments, the side of the body 221 along the second direction is connected to the thickening portion 222 through welding. The thickening portion 222 is welded to the body 221 through laser welding, argon-arc welding, friction stir welding, or the like so that the structural strength and stability of the second expansion-resistant portion 22 are improved. Thus, better resistance to the expansion and deformation of the cells 40 is facilitated. The expansion-resistant beams 2 in this embodiment may be aluminum profile beams. The aluminum profile beams are lightweight, have high structural strength, and are easy to weld. In another embodiment, the expansion-resistant beams 2 may be steel beams or the like.

As shown in FIG. 4, a cavity is formed in each of the expansion-resistant beams 2, and multiple stiffeners 20 are disposed in the cavity. The stiffeners 20 are disposed in each of the expansion-resistant beams 2 so that the structural strength and stability of the expansion-resistant beams 2 are improved. Thus, better resistance to the expansion and deformation of the cells 40 is facilitated.

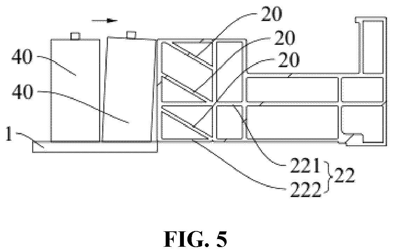

In some embodiments, as shown in FIG. 5, after the cells 40 expand and deform, the bottoms of the cells 40 are adhered to the baseplate 1 and remain stationary while the tops of the cells 40 are subjected to less restraint. Therefore, the tops of the cells 40 deform (as shown by arrows in FIG. 5), resulting in the detachment of the aluminum connecting bar between respective ones of the cells 40. Therefore, at least part of the stiffeners 20 are inclined upwards along a vertical direction at the inner side of a sidewall of a expansion-resistant beam 2 abutting against a cell group 4. Thus, the stiffeners 20 can support the cells 40 well, thereby improving the effect of the resistance to the expansion and deformation.

An electrical device is further provided in this embodiment. The electrical device includes an electrical main machine and a battery pack. The battery pack is mounted on the electrical main machine to power the electrical main machine. The electrical device may be an electric vehicle, a charging station, or the like, which is not specifically limited herein.

A battery tray is provided in an embodiment. The structure of the battery tray is substantially the same as that of the battery tray in embodiment one. The battery tray in this embodiment differs from the battery tray in embodiment one mainly in that the assembly structure of the body 221 and the thickening portion 222 is different.

In some embodiments, the thickening portion 222 and the body 221 are independent components. A cell group 4 is mounted in the second mounting region 12. The thickening portion 222 is detachably sandwiched between the body 221 and the cell group 4. One side surface of the thickening portion 222 along the second direction fits and abuts against the body 221, and the other side surface of the thickening portion 222 along the second direction fits and abuts against the cell group 4. The thickening portion 222 and the body 221 may have the same internal structures, and the thickening portion 222 can be flexibly filled and mounted between the body 221 and the cell group 4, thereby implementing flexible mounting of the thickening portion 222. Moreover, thickening portions 222 having different widths may be flexibly selected according to the number of cells 40 in the cell group 4 in the second mounting region 12, so it is unnecessary to replace an expansion-resistant beam 2. Thus, the versatility of the battery tray is improved.

A battery tray is provided in an embodiment. The structure of the battery tray is substantially the same as that of the battery tray in embodiment one. The battery tray in this embodiment differs from the battery tray in embodiment one mainly in that the assembly structure of the body 221 and the thickening portion 222 is different.

In some embodiments, the first expansion-resistant portion 21 is integrally formed with the second expansion-resistant portion 22. That is, the first expansion-resistant portion 21, the body 221, and the thickening portion 222 are integrally formed. An extra portion is removed from the first expansion-resistant portion 21 through machining so that cells 40 are filled in the extra portion and the cell groups 4 in the first mounting region 11 are reliably limited. The removal is performed through machining so that a removal amount can be flexibly selected according to the number of cells 40 in the cell groups 4 in the first mounting region 11 so it is unnecessary to replace an expansion-resistant beam 2. Thus, the versatility of the battery tray is improved.

The preceding embodiments illustrate only the basic principles and features of the present disclosure and the present disclosure is not limited by the preceding embodiments.

## Claims

1. A battery tray, comprising:
a baseplate (1) and at least two expansion-resistant beams (2) extending along a first direction, wherein at least two expansion-resistant beams (2) are arranged at intervals on the baseplate (1) along a second direction, and the first direction is perpendicular to the second direction;
wherein one of the at least two expansion-resistant beams (2) at least comprises a first expansion-resistant portion (21) and a second expansion-resistant portion (22), a first mounting region (11) is formed between the first expansion-resistant portion (21) and another expansion-resistant beam (2) of the at least two expansion-resistant beams (2), a second mounting region (12) is formed between the second expansion-resistant portion (22) and the another expansion-resistant beam (2), a width of the first expansion-resistant portion (21) along the second direction is unequal to a width of the second expansion-resistant portion (22) along the second direction, and a length of the first mounting region (11) along the second direction is unequal to a length of the second mounting region (12) along the second direction.

2. The battery tray according to claim 1, wherein the second expansion-resistant portion (22) comprises a body (221) and a thickening portion (222), the width of the first expansion-resistant portion (21) along the second direction is equal to a width of the body (221) along the second direction and is integrally formed with the body (221), and the thickening portion (222) is detachably disposed at a side of the body (221) along the second direction.

3. The battery tray according to claim 2, wherein the side of the body (221) along the second direction is connected to the thickening portion (222) through welding.

4. The battery tray according to claim 2, wherein a cell group (4) is mounted in the second mounting region (12), the thickening portion (222) is detachably sandwiched between the body (221) and the cell group (4), one side surface of the thickening portion (222) along the second direction fits and abuts against the body (221), and the other side surface of the thickening portion (222) along the second direction fits and abuts against the cell group (4).

5. The battery tray according to claim 1, wherein the first expansion-resistant portion (21) is integrally formed with the second expansion-resistant portion (22).

6. The battery tray according to any one of claims 1 to 5, wherein an expansion-resistant beam of the at least two expansion-resistant beams (2) comprises a cavity, and a plurality of stiffeners are disposed in the cavity.

7. The battery tray according to claim 6, wherein at least part of the plurality of stiffeners are inclined upwards along a vertical direction.

8. The battery tray according to any one of claims 1 to 5, further comprising a longitudinal beam (3) extending along the second direction, a limit slot (23) is formed between the first expansion-resistant portion (21) and the second expansion-resistant portion (22), and one end of the longitudinal beam (3) is engaged and mounted in the limit slot (23).

9. A battery pack, comprising cell groups (4) and the battery tray according to any one of claims 1 to 8, wherein the cell groups (4) are mounted on the battery tray.

10. An electrical device, comprising the battery pack according to claim 9.
